(19) Europäisches Patentamt
European Patent Office
Office européen des brevets

(11) EP 0 821 370 A2

(12) EUROPEAN PATENT APPLICATION

(43) Date of publication:
28.01.1998 Bulletin 1998/05

(51) Int. Cl.⁶: $H01B\ 7/28$

(21) Application number: 97112134.8

(22) Date of filing: 16.07.1997

(84) Designated Contracting States:
AT BE CH DE DK ES FI FR GB GR IE IT LI LU MC NL PT SE
Designated Extension States:
AL LT LV RO SI

(30) Priority: 26.07.1996 JP 215537/96

(71) Applicant:
SANYO CHEMICAL INDUSTRIES, Ltd.
Kyoto-shi Kyoto-fu, 605 (JP)

(72) Inventors:
• Zenitani, Yukio
Kitakatsuragi-gun, Nara-ken 636 (JP)
• Tachi, Satoru
Takatsuki-shi, Osaka-fu, 569 (JP)

(74) Representative:
VOSSIUS & PARTNER
Siebertstrasse 4
81675 München (DE)

(54) A water penetration-preventing material for an underground cable having a protective tube, and a water penetration-preventing structure

(57) A water penetration-preventing material comprising a water-swellable water-absorbent resin and a wrapper material comprising at least two sheets, the water-swellable water-absorbent resin is held in the wrapper material, and at least one part of the wrapper material is water permeable. A water penetration-preventing structure comprises the water penetration-preventing material arranged between the cable and the protective tube of the underground cable having a protective tube. The above mentioned water penetration-preventing material and water penetration-preventing structure prevent water that has entered from leaking into a manhole by preventing the water from entering through a space between the cable and the protective tube or by holding the water that has entered in a certain section between the cable and protective tube.

Fig. 1

## Description

The present invention relates to a water penetration-preventing material for an underground cable having a protective tube, and to a water penetration-preventing structure. More specifically, it relates to a water penetration-preventing material interposed between the above mentioned cable and the protective tube covering the cable, and preventing water that has entered from leaking into a manhole by preventing the water from entering through a space between the cable and the protective tube or by holding the water that has entered in a certain section between the cable and the protective tube.

In recent years, electric cables and optical fiber cables or the like tend to be buried in the ground. Such cables are covered with protecting tubes made of polyvinyl chloride or the like. However, in some cases, water leaks or penetrates into the protecting tube from joined parts or cracked parts of the protecting tube. If the water that has penetrated gets into a manhole, so that the manhole fills with the water, it will take a great deal of time and labor to remove the accumulated water at the time the cables are checked. Thus, water is prevented from entering a manhole by interposing a mortar or rubber packing at the portion between the cable and the protective tube next to an exit to a manhole.

However, in the above mentioned conventional method in which a packing is used, the water penetration-preventing property is insufficient. Actually, in many cases, water accumulates in a manhole because water enters due to leakage of the packing. Consequently, the check of cables cannot be conducted before such accumulated water is pumped out. Sometimes, it takes two days to do such work, which requires a great deal of time and labor. Furthermore, it is not easy to replace the cracked packing.

The present invention seeks to solve the above mentioned problems and is directed to a sheet-like water penetration-preventing material in which a water-swellable water-absorbent resin is held.

In other words, the present invention provides a water penetration-preventing material for an underground cable having a protective tube; the above mentioned water penetration-preventing material comprises a water-swellable water-absorbent resin and a wrapper material comprising at least two sheets, the water-swellable water-absorbent resin is held in the wrapper material, and at least one portion of the wrapper material is water permeable. Further, the present invention provides a water penetration-preventing structure in which the water penetration-preventing material is interposed between the cable and the protective tube.

When the water that has entered the protective tube of the cable reaches the water penetration-preventing material of the present invention, the water is absorbed by the water penetration-preventing material through the water permeable portion of the wrapper material. Then, a space between the inner surface of the protective tube and outer surface of the cable is sealed with the water-swellable water-absorbing resin being held in the wrapper material, which quickly swells by absorbing water. Consequently, the water penetration-preventing material of the present invention exhibits a sufficient water penetration-preventing property that has never been attained conventionally.

Fig. 1 is a perspective view of one embodiment of the water penetration-preventing material of the present invention in the shape of a tape.

Fig. 2 is a cross sectional view of one embodiment of the water penetration-preventing material of the present invention in the shape of a tape.

Fig. 3 is a sectional perspective view of one embodiment of the state in which the water penetration-preventing structure of the present invention is formed.

Fig. 4 is a cross sectional view showing one embodiment of a test of the water penetration-preventing material of the present invention.

The wrapper material of the present invention must have at least one water permeable portion, in order that water may contact the water-swellable water-absorbent resin. It is sufficient that water can enter from gaps between two or more layers of sheets of the wrapper material. However, in order for water-swellable water absorbent resin to absorb water quickly, it is preferable that at least a part of an outer sheet of the wrapper material is water permeable, and moreover has such strength and flexibility that the wrapper materials are not broken under the wet condition when the water-absorbent resin swells with water. Consequently, cloth or mesh film is preferably used for the wrapper material of the present invention.

Cloth is not limited as long as it has the above mentioned wet strength. Examples of such cloth material include synthetic fibers such as polyester, polyamide, acrylic fiber or the like, semi-synthetic fibers such as acetate, rayon or the like, natural fibers such as cotton, silk, wool or the like, and a mixtures thereof such as blended yarn or the like. The cloth may be a woven or non-woven fabric. Moreover, examples of mesh film include a sheet having a great number of micropores, for example, polyethylene film, polypropylene film or the like. The micropore of the mesh film is not limited, but the diameter of each micropore is preferably in the range of 0.001 to 0.010 mm and the surface ratio of the micropores is preferably in the range of approximately 20 to 70 % with respect to the entire surface area of the wrapper material.

In order for the water-swellable water-absorbent resin to swell uniformly in the wrapper material when it absorbs water, it is preferable that the water-swellable water-absorbent resin is held between the wrapper materials in a state in which the amount of the resin per surface area of the water penetration-preventing material is approximately uniformly distributed. Therefore, among the above mentioned materials, a felt-like non-woven fabric is particularly preferable. The felts are not limited as long as they come under the general name of felt such as woven felt, press felt, needle punch felt or the like. For example, felts described in "Hand Book of Industrial Textile Material (by the Textile Machinery Society of Japan, pages 362 to 381)" can be used.

As for the shape of the wrapper material, a tape-like or belt-like shape, which can be cut in accordance with the size or shape of the objects to be prevented from water penetration, is preferably used from an operating effect view point. The width of the wrapper material sheet is not limited as long as the material is wide enough to attain a water penetration-preventing property. However, in general, the width is in the range of 2 to 30 cm. Moreover, it is preferable that at least the longitudinal edges of an open portion of tape-like or belt-like wrapper material between the sheets are joined in a state in which the water-swellable water-absorbent resin is retained even after it is swollen with water. For joining, the following methods may be applied: one sheet of wrapper material is folded back to cover the underlying portion and at least the longitudinal upper and lower edges of the circumference are joined; two sheets of wrapper material are superinposed upon each other and then at least the longitudinal upper and lower edges of the circumference are joined.

The above mentioned joining method is not limited as long as the water-swellable water-absorbent resin is retained in the sheet after it is swollen with water. Examples of such methods include heat sealing with the interposion of a thermoplastic resin film such as polyethylene or other material having low softening temperature; sewing; adhesive bonding with an adhesive agent such as hot melt adhesive or the like; and joining the open end portion by covering the open end portion with a film or cloth and then heat sealing it, adhesive bonding or sewing.

In a case where the water penetration-preventing material has a tape-like shape or belt-like shape, both sheets are joined by needle punching approximately uniformly with respect to the surface of the sheets in a state in which the water-swellable water-absorbent resin is uniformly held in the wrapper material, so that the water-swellable water-absorbent resin can be fixed and can uniformly swell within the sheets when it absorbs water. In addition, in a case where the tape-like or belt-like water penetration-preventing material is cut into the appropriate length, it is preferable that the cut portion is folded back or connected in the vicinity of the cutting place by means of a stapler or other means.

The amount used, in other words, the weight per square meter of the water-swellable water-absorbent resin of the wrapper material is generally in the range of 5 to 500g/m$^2$, more preferably in the range of 10 to 200g/m$^2$. It is preferable for the weight per square meter to be 5 to 500 g/m$^2$ since the amount of swelling of the water-swellable water-absorbent resin when it absorbs water is large, and the water penetration-preventing effect is obtained sufficiently. Moreover, in a case where the above mentioned weight per square meter falls in the above mentioned range of values, the water-absorbent resin should remain in the wrapper material. In addition, this is economical and preferable in terms of costs.

The water absorbent resin of the present invention is a water-insoluble water-swellable resin. Specific examples of such resins include crosslinked neutralized polyacrylic acid, self-crosslinked neutralized polyacrylic acid, partial hydrolysates of crosslinked polyacrylamide, graft copolymers of starch-acrylic acid, hydrolysates of graft copolymers of starch-acrylonitrile, hydrolysates of graft copolymers of cellulose-acrylonitrile, saponified copolymers of vinyl acetate - acrylic ester, crosslinked copolymer of acrylic acid and acrylic ester, crosslinked carboxylic acid modified polyvinyl alcohol, crosslinked copolymers of acrylic acid salt - acrylamide, crosslinked copolymers of isobutylene-maleic anhydride, crosslinked carboxymethyl cellulose, and crosslinked sulfonated polystyrene. The above mentioned resins may be used alone or in combination of two or more resins.

Among the above, the polymer compounds derived from non-starch material, for example crosslinked neutralized polyacrylic acid and partial hydrolysates of crosslinked polyacrylamide are preferably used, since they do not readily undergo decomposition by microbes.

For a rusty pipe portion, a water-absorbent resin with a great capacity to absorb an aqueous solution containing polyvalent metal ion is preferable. Examples of such resins include a water-absorbent resin comprising a thermally-crosslinked product of a copolymer of 20 to 99 mole % of (meth)acrylamide, 1 to 80 mole % of (meth)acrylic acid (alkaline metal salt), and optionally not more than 10 mole % of another water-soluble ethylenically unsaturated monomer, or a water-absorbent resin derived from monomer unit components comprising 40 to 99 weight % of water soluble mono (meth)acrylate having hydroxyl groups, 1 to 60 weight % of (meth)acrylic acid (alkaline metal salt), 0.00001 to 3 weight % of crosslinking agent with respect to the total weight of monomers and optionally not more than 10 weight % of another water soluble ethylenically unsaturated monomer.

The term "(meth)acryl- denotes "acryl- or "methacryl-"; and (meth)acrylic acid (alkaline metal salt) as used herein denotes " (meth)acrylic acid" or "(meth)acrylic acid alkaline metal salt".

It is preferable for a water-swellable water-absorbent resin to generally have a saturation absorbency under load in the range of 5 to 60 g/g, an initial absorbency under load in the range of 5 to 40 g/g, and the gel elasticity in the range of 1000 to 20000 N/m$^2$ (10000 to 200000 dyne/cm$^2$). More preferably, the saturation absorbency under load is in the range of 20 to 60 g/g, the initial absorbency under load is in the range of 15 to 40 g/g, and the gel elasticity is in the range of 2000 to 20000 N/m$^2$ (20000 to 200000 dyne/cm$^2$ ). It is econom-

ical if the saturated absorbency under load and the initial absorbency under load of the water-absorbent resin are not less than 5g/g respectively, since a small amount of water-absorbent resin makes it possible to attain the necessary absorbing property. In addition, it is preferable to use a water absorbent resin having a gel elasticity of not less than 1000 N/m$^2$ (10000 dyne/cm$^2$), since a gel swollen with water is not too soft; a swollen gel is not readily deformed by load or external force; a blocking due to gels adhering to each other does not occur; and permeation or dispersion of water can be prevented.

The saturated absorbency under load, the initial absorbency under load and the gel elasticity are the values calculated by the following operation.

Saturated Absorbency under Load and Initial Absorbency under Load:

A cylindrical plastic tube (inner diameter: 30mm, height: 60mm) having a 250-mesh nylon net glued to the bottom was filled with 0.1 g of water absorbent resin to uniformly spread therein, and a weight with an outer diameter of 30mm was placed thereon to apply a load of 20g/cm$^2$. The tube containing the polymer sample was then immersed in a Petri dish (diameter: 12 cm) filled with 60 ml of physiological saline solution and allowed to stand with the nylon net side down. The weight gain of the sample by absorbing the physiological saline solution was measured 10 minutes and 60 minutes later. The 10-fold value of the weight gain after absorption for 10 minutes was determined as the initial absorbency under load, and the 10-fold value of the weight gain after absorption for 60 minutes as the saturated absorbency under load. [Herein, g/g denotes the absorbency of physiological saline solution (g) per 1 g of water-absorbent resin.]

Gel Elasticity:

40 ml of physiological saline solution was added to 1 g of water-absorbent resin to produce a hydro-gel having a mass 40 times greater than that of the starting resin. 0.1 g of hydro-gel was removed and placed on the center of the supporting table of a creep meter ( the product of YAMADEN CO., LTD). Then, the cylinder was lowered so as to press the hydro-gel to the thickness of 0.3mm. The stress when pressure was applied (F) (g•weight) and the cross-sectional area of pressurized hydro-gel (S) (cm$^2$) were measured respectively. The stress per unit area under pressure was calculated, and this value was defined as the gel elasticity.

$$\text{Gel Elasticity} = (F \times 980) / S \ [\text{dyne/cm}^2]$$
$$= (F \times 980) / S \times (1/10) \ [\text{N/m}^2]$$

The shape of the water-swellable water-absorbent resin used in the present invention is not specifically limited. Any particulate or fiber material can preferably be used. A particulate shape, such as a fine particulate, granular, agglomerate, lamellar, lump, spherical shape or the like, is more preferable.

In a case where the absorbent resin is particulate, the particle size distribution is not specifically limited, either. The content of particles having a particle size in the range of 1 to 1000 μm, more preferably in the range of 50 to 850 μm, is not less than 95 wt. %.

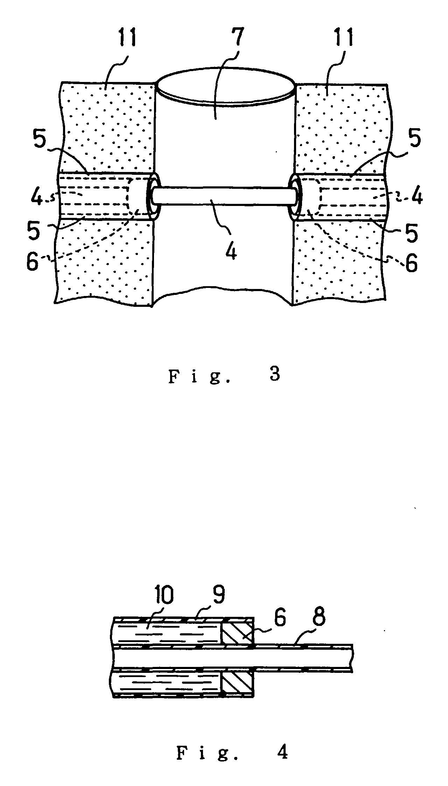

The formation of the water-penetration preventing structure of the present invention will be explained as follows. An underground cable such as an electric cable or an optical fiber cable or the like is generally protected by the protective tubes such as a polyvinyl chloride tube, an earthenware pipe, a Hume pipe or the like. If the surface of the protective tube cracks or, if the sealing of the junction portion of the protective tube is insufficient, water (in some cases, sea water) enters the tube. The water penetration-preventing structure of the present invention can be used for the sealing portion so as to prevent water from entering the tube. However, as shown in the below mentioned Fig. 3, it is more effective for the water penetration-preventing material to be provided at the portion between the cable and the protective tube if the tube is next to an exit to a manhole in order to prevent water from entering the manhole. The water, no matter where it enters from, can be prevented from entering a manhole, because the water absorbent resin swells with water, thereby sealing space of the protective tube.

In a case where the above mentioned structure is formed, the cable is inserted in the protective tube in a state in which the water penetration-preventing material is held in accordance with the size of the space between the external surface of the cable and the inner wall of the protective tube. Since the water penetration-preventing material is used in this way, it is necessary for the water penetration-preventing material to lend itself for use in an optional size and shape corresponding to the size and shape of the space. Therefore, the shape of the water penetration-preventing material is preferably tape-like or belt-like. If the material has a tape-like or belt-like shape, it can be wound around the cable and then cut into the appropriate length. In addition, in order to ensure that the water penetration-preventing material stays in place when it is inserted into the protective tube, one end of the edge of the water penetration-preventing material is fixed to the external surface of the cable and then the material is wound therearound.

The invention is further described hereinafter by referring to Examples, but is not limited to them alone.

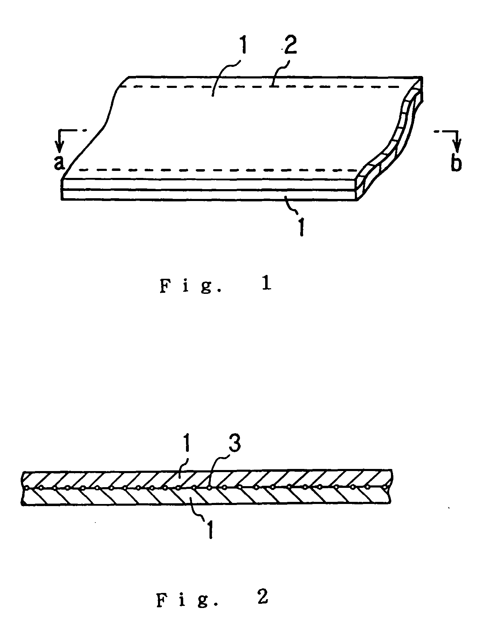

Fig. 1 is a perspective view showing one part of an example of the water penetration-preventing material of the present invention in the shape of a tape.

In Fig. 1, numeral 1 illustrates a wrapper material comprising two sheets in which the water-swellable water-absorbent resin is held; and 2 illustrates a seam joining the longitudinal edge portions of both upper and lower sheets.

Fig. 2 is a sectional view taken at the portion of line a-b in Fig.1, showing the water penetration-preventing material of the present invention.

In Fig. 2, numeral 1 illustrates the above mentioned wrapper material; 3 illustrates particles of the water-swellable water-absorbent resin which are held within the wrapper materials.

Fig. 3 is a sectional perspective view showing an example of the state in which the water penetration-preventing structure of the present invention is provided.

In Fig. 3, numeral 4 illustrates an electric cable; 5 illustrates the protective tube for a cable to be protected; 6 illustrates the water penetration-preventing material of the present invention; and 7 illustrates a manhole for an underground cable.

The electric cable 4 has a cross section whose shape is generally circular or approximately circular, and is covered with an external skin material. The protective tube 5 such as a polyvinyl chloride tube, an earthenware pipe, a Hume pipe or the like, protects one or a plurality of cables. In this case, a single cable is protected by the protective tube. The manhole 7 is provided for the purpose of checking the cable. Therefore, the cable in a manhole is not covered with a protective tube. If cracks occur on the surface of a protective tube, or if the sealing of the sealed portion of the protective tube is insufficient, water (in some cases, sea water) enters the tube. In a case of not having a water penetration-preventing material, or having a water penetration-preventing material whose effect is insufficient; the water entered through the protective tube accumulates in a manhole. The water penetration-preventing material of the present invention is provided for the purpose of preventing water from entering a manhole. In this example, in order to maximize the effect, the water penetration-preventing material of the present invention is interposed at the portion between the cable 4 and the protective tube 5 next to an exit to a manhole 7. When the tape-like water penetration-preventing material (the width : 2-30 cm) is used, it is fixed to an external surface of the cable; then wound like whirls tightly and is cut when it reaches the internal surface of the protective tube. Then, the cable is inserted into the protective tube in such a way that the portion 6 where the water penetration-preventing material is wound is located next to an exit to a manhole. The water penetration-preventing structure which is formed in this way swells with water when the water entering the protective tube contacts the water-swellable water-absorbent resin and fills gaps within the protective tube. Thus, the water is prevented from entering the manhole. Such a water penetration-preventing effect was proved in the following example.

Example

Production of Water Penetration-Preventing Material:

Felt-like polyester non-woven fabric (weight per square meter: 150g/m$^2$) was cut to a width of 10cm and "SANWET IM-5000D" (crosslinked polyacrylic acid partially neutralized water-swellable water-absorbent resin, a product of Sanyo Chemical Industries, Ltd.) was uniformly spread to 100g/m$^2$ thereon except around the circumference. Moreover, another non-woven fabric was piled up thereon and sewn at the circumference, to produce the water penetration-preventing material of the present invention as shown in Fig. 1 and Fig. 2.

Formation of the Water Penetration-Preventing Structure:

In a simulation apparatus shown in Fig. 4, equipped with a polyvinyl chloride pipe 9 with an outer diamter of 15cm, a polyvinyl chloride pipe 8 having an outer diameter of 8cm is inserted into the larger pipe 9. The above mentioned water penetration-preventing material in the shape of a tape is wound tightly onto the pipe 8 and is cut when the diameter of the wound structure approximately equals the inner diameter (inner surface) of the outer pipe 9.

While maintaining this state, the inner pipe 8 was gradually inserted into the outer pipe 9. The inserting operation was stopped when the water penetration-preventing material was positioned next to an entrance of the pipe 9, to thus produce the water-penetration-preventing structure. Herein, the polyvinyl chloride pipe 8 corresponds to an underground cable; and the polyvinyl chloride pipe 9 corresponds to the protective tube for the cable.

Test for Prevention of Water Penetration :

After water was poured into the above mentioned water penetration-preventing material to cause the water penetration-preventing material to swell, water 10 was poured between the inner tube 8 and outer tube 9. Whether or not water leaks from the water penetration-preventing material portion 6 to the outside was observed under the conditions in which the water 10 was not pressurized for three months; and under the conditions in which the water 10 was pressurized at 3kg/cm$^2$ for one hour.

Under all conditions, no water leak was observed.

The water penetration-preventing material and water penetration-preventing structure of the present invention can be used in a convenient manner as a water penetration-preventing material for under ground cable having protective tube. In addition, it exhibits an excellent water preventing property over a long period of time. For these reasons, the water penetration-preventing material of the present invention is preferably used for the water penetration-preventing material for an underground cable having a protective tube, for example, electric cable and optical fiber cables. It is especially useful for electric cables.

**Claims**

1. A water penetration-preventing material for an underground cable having a protective tube comprising a water-swellable water-absorbent resin and a wrapper material comprising at least two sheets, said water-swellable water-absorbent resin is held in said wrapper material, and at least one part of said wrapper material is water permeabe.

2. The water penetration-preventing material according to claim 1, wherein at least one part of an outer sheet is a cloth or a mesh film.

3. The water penetration-preventing material according to claim 2, wherein said cloth is a felt-like non-woven fabric.

4. The water penetration-preventing material according to any of claims 1 to 3, wherein the shape of said wrapper material sheet is cuttable tape or belt, and at least the longitudinal edges of an open portion between the sheets are joined.

5. The water penetration-preventing material according to claim 4, wherein a portion of the sheets of said wrapper material is joined by heat sealing, sewing, and adhesive bonding with an adhesive agent, or by covering the open portion with a film or cloth and fixing the covering portions by heat sealing, adhesive bonding or sewing, wherein the water-swellable water-absorbent resin is held in such a way that the resin is prevented from extruding out of said joined portion even after the resin is swollen with water.

6. The water penetration-preventing material according to claim 4 or 5, wherein the sheets are joined by needle punching in a state in which the water-swellable water-absorbent resin is held in said wrapper materials.

7. The water penetration-preventing material according to any of claims 1 to 6, wherein the amount of the water-swellable water-absorbent resin is in the range of 5 to 500 g/m$^2$.

8. The water penetration-preventing material according to any of claims 1 to 7, wherein the water-swellable water-absorbent resin has a saturation absorbency under load in the range of 5 to 60 g/g, an initial absorbency under load in the range of 5 to 40 g/g, and a gel elasticity in the range of 1000 to 20000 N/m$^2$ (10000 to 200000 dyne/cm$^2$).

9. A water penetration-preventing structure comprising the water penetration-preventing material according to any of claims 1 to 8 arranged between the cable and the protective tube of an underground cable having a protective tube.

10. The water penetration-preventing structure according to claim 9, wherein the water penetration-preventing material is a tape-like shape or belt-like shape and is wound around the cable in order to seal the space between the cable and protective tube.

11. The water penetration-preventing structure according to claim 9 or 10, wherein a portion contacting the cable of the water penetration-preventing material is fixed to the cable.

12. The water penetration-preventing structure according to any of claims 9 to 11, wherein the underground cable is an electric cable.

13. The water penetration-preventing structure according to any of claims 9 to 12, which prevents water from entering a manhole, wherein the water penetration-preventing material arranged between the cable and protective tube of the underground cable is provided next to an exit to a manhole; the water penetration-preventing material, through the portion having water permeability, absorbs water that has entered the protective tube of the cable; and the water-swellable water-absorbent resin in the material swells with the water, thereby sealing the space in the protective tube.

EP 0 821 370 A2

Fig. 1

Fig. 2

Fig. 3

Fig. 4